# EUROPEAN PATENT SPECIFICATION

(11) **EP 2 670 660 B1**
(45) Date of publication and mention of the grant of the patent: **17.12.2014**
(21) Application number: 12703966.7
(22) Date of filing: 01.02.2012
(51) Int. Cl.: B64C 21/10, F15D 1/12, B23K 26/40

(54) **METHOD FOR MANUFACTURING A FLOW BODY WITH A DESIRED SURFACE TEXTURIZATION AND LASER MATERIAL REMOVING DEVICE**
VERFAHREN ZUR HERSTELLUNG EINES STRÖMUNGSKÖRPERS MIT EINER GEWÜNSCHTEN OBERFLÄCHENTEXTURIERUNG UND VORRICHTUNG ZUR ENTFERNUNG EINES LASERMATERIALS
PROCÉDÉ DE FABRICATION D'UN CORPS D'ÉCOULEMENT À TEXTURISATION DE SURFACE SOUHAITÉE ET DISPOSITIF DE RETRAIT DE MATIÈRE AU LASER

(30) Priority: 01.02.2011 DE 102011009998; 01.02.2011 US 201161438318 P
(43) Date of publication of application: 11.12.2013
(73) Proprietor: Airbus Operations GmbH, 21129 Hamburg (DE)
(72) Inventor: REH, Jan, 22303 Hamburg (DE); DEHN, Martin, 21521 Aumühle (DE); SANDER, Peter, 28215 Bremen (DE)
(74) Representative: UEXKÜLL & STOLBERG
(86) International application number: PCT/EP2012/000447
(87) International publication number: WO 2012/104078

(56) References cited:
- WO-A1-2009/060234
- DE-A1-102007 012 440
- US-A- 4 907 765
- US-A- 4 994 639
- US-A- 5 281 798

## Description

This application claims the benefit of the filing date of German Patent Application No. DE 10 2011 009 998.0 filed 01.02.2011 and of United States Provisional Patent Application No. US 61/438,318 filed 01.02.2011, the disclosures of which applications are hereby incorporated herein by reference.

The invention relates to a method for manufacturing a flow body with a desired surface texturization and a laser material removing device.

DE 10 2006 004644 B4 describes a method for manufacturing flow bodies with texturized flow surfaces. In this case, a surface texture is embossed on a semi-finished product by pressing on a molding tool, wherein the shape of the embossed surface texture corresponds to the texturized flow surface to be fabricated. The semi-finished product with the embossed surface texture is adhesively bonded to a flow body in its unfinished state in order to create the texturized flow surface of the flow body.

US 4,994,639 describes a method for manufacturing a flow body with a desired surface texturization in order to optimize its resistance, according to the preamble of claim 1, comprising the steps of applying a coat of color varnish to color the outside of the flow body surface at least on the primary surface areas of the flow body, applying a coat of clear varnish on at least the primary surface area of the flow body, hardening the coat of clear varnish by exposing it to infrared radiation, and using a material removing laser to mill the desired surface texturization out of the clear varnish coating.

DE 10 2007 012 440 A1 describes determining the position and the heigh of an eroded surface texture prior to refurbishing the surface texture.

The object of the invention is to provide a method for manufacturing a flow body with a desired surface texturization and a laser material removing device with which a desired surface texturization can be created on a flow body in an efficient and sufficiently precise manner.

This object is achieved with the features in the independent claims. Additional embodiments are indicated in the subclaims referring back to the latter.

One aspect of the invention provides a method for manufacturing a flow body with a desired surface texturization in order to optimize its resistance. According to the invention, the flow body can be a watercraft, such as a ship, a surface vehicle, an aircraft or a constituent of such a vehicle with a flow surface provided for exposure to an incoming flow.

In particular, the method for manufacturing a flow body with a desired surface texturization exhibits the following steps to optimize its resistance:
▪ applying a coat of clear varnish on at least the primary surface area of the flow body, in particular after applying and in particular spraying a color varnish to color the outside of the flow body surface at least on the primary surface area of the flow body,
▪ hardening the coat of clear varnish by exposing it to infrared radiation,
▪ determining the coordinates for the coated flow body surface in the form of real flow body data,
▪ determining a real flow body model for the outer shape of the flow body with the desired surface texturization to be created from the determined real flow body data for the coated flow body surface and from a nominal flow body model for the outer shape of the flow body, to include in particular the desired surface texturization,
▪ using a material removing laser to mill the desired surface texturization out of the clear varnish coating, wherein commands for activating the material removing laser for creating the desired surface texturization are based on the real flow body model.

The flow body to be provided with a desired surface texturization can here in particular be a watercraft like a ship, a surface vehicle, an aircraft or a constituent of such a vehicle with a flow surface provided for exposure to an incoming flow.

One embodiment of the method according to the invention can provide that
▪ color varnish and clear varnish be applied over the entire surface of the flow body, including the windows, optionally recessed access openings, and recesses for accommodating parts, components and/or sensors on the outside of the flow body, and that
▪ clear varnish applied to the windows while milling the desired surface texturization out of the clear varnish coating be milled off in such a way as to completely mill off color varnish and clear varnish present on the windows.

It can here be provided in particular that a two-component varnish be used for the clear varnish coating.

An embodiment of the method according to the invention can provide that commands for the adjustment motions of the material removing laser are issued based on the real flow body model by virtue of the fact that, for purposes of material removal, a desired path for the adjustment motions of the material removing laser is determined based on a prescribed distance between the desired path and points on the outer surface of the real flow body model, and the material removing laser is commanded in such a way that the latter moves along the desired path.

An embodiment of the method according to the invention can provide that commands for the adjustment motions of the material removing laser are issued based on position points of the clear varnish-coated outer surface of the flow body to be texturized, wherein an ultrasound rangefinder is used in an ultrasound removal measurement to determine the position points as points having a predetermined position for the outer surface of the clear varnish coating, and a desired path for the adjustment motions of the material removing laser is determined from these position points, and commands are issued to the material removing laser so as to move it along the desired path.

An embodiment of the method according to the invention can provide that
▪ the ultrasound rangefinder traverse desired paths along the surface of the flow body to be texturized, and that, at positions of the ultrasound rangefinder, the respective position and the distance of the ultrasound rangefinder or a reference point of the latter from the outer surface of the flow body to be texturized be determined, and that the respective position and the respective distance be used to ascertain a desired position and desired distance for the adjustment motion of the material removing laser, and that
▪ commands be issued to the adjustment device of the material removing laser in such a way that, while executing the adjustment motion of the material removing laser, the desired distances be corrected based on a laser distance measurement to adjustment positions with a respectively predetermined distance that is predetermined for executing the material removing process.

In an example, which does not constitute an embodiment of the invention, a method having the following steps is provided:
▪ applying a color varnish to color the outside of the flow body surface, at least on the primary surface areas of the flow body, and applying a coat of clear varnish on at least the primary surface areas of the flow body, wherein the color varnish and clear varnish are applied over the entire surface of the flow body, including the windows, optionally recessed access openings and recesses for accommodating parts, components and/or sensors on the outside of the flow body,
▪ hardening the coating of clear varnish by exposing it to infrared radiation,
▪ milling the desired surface texturization out of the clear varnish coating of the clear varnish applied to windows in such a way as to completely mill off color varnish and clear varnish present on the windows.

In particular, it can here be provided in particular that the flow body to be provided with a desired surface texturization be a watercraft, such as a ship, a surface vehicle, an aircraft or a constituent of such a vehicle with a flow surface provided for exposure to an incoming flow.

Another aspect of the invention provides a laser material removing device for creating a desired surface texturization on a coated flow body in order to optimize its resistance, with the laser material removing device exhibiting:
▪ a nominal flow body model module for storing prescribed nominal flow body model data, which describe the outer shape of the flow body, including the desired surface texturization,
▪ a laser rangefinder for determining real surface points of the real flow body,
▪ a flow body data correction module functionally connected with the laser rangefinder, with a function for correcting the prescribed nominal flow body model data to real flow body data for the outer shape of the real flow body with the desired surface texturization to be created,
▪ a material removing laser for generating the desired surface texturization on the flow body,
▪ a desired path determining function to determine a desired path as a setting for the adjustment motion of the material removing laser along the flow body in order to generate the desired surface texturization, wherein the desired path determining function ascertains the desired path based on the real flow body data,
▪ a command output device for issuing commands to the material removing laser, which, based on the real flow body data for the outer shape of the real flow body, generates command signals for moving the material removing laser along the desired path, via which the material removing laser is moved in a predetermined way over the flow surface to mill the desired surface texturization out of the clear varnish coating.

The flow body according to the invention can generally be a watercraft, such as a ship, a surface vehicle, an aircraft or a constituent of such a vehicle with a flow surface provided for exposure to an incoming flow.

In an embodiment of the laser material removing device, the latter can exhibit a texture forming command output device, with which the laser beam is adjusted with respect to direction and intensity as the material removing laser is guided along the desired trajectory, so as to create the desired surface texturization.

In an embodiment of the laser material removing device according to the invention, the latter can exhibit a safety shutdown function with an image recognition module, which performs a function to determine the approach by the laser material remover to a primer coat located under the clear varnish through a color comparison or radiance factor comparison of the color or radiance factor currently arising at the laser beam interface of the varnish coating to the color or radiance factor of the primer coat, wherein the safety shutdown function generates a shutdown signal, and relays it to the controller to reduce the laser beam intensity or shut down the laser material remover once the color or radiance factor arising at the laser beam interface has dropped below a predetermined difference in color value relative to the color of the primer coat.

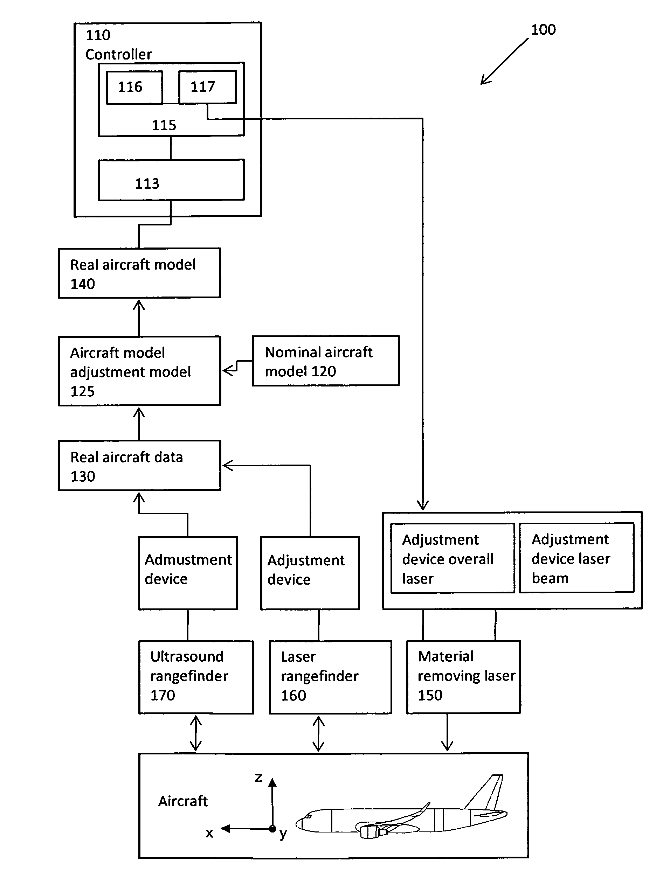

Exemplary embodiments of the invention will be described below using the attached Fig. 1, which presents a diagrammatic view of the functions of the laser material removing device according to the invention.

The laser material removing device according to the invention provided with reference number 100 on Fig. 1 is used to fabricate a flow body with a desired surface texturization in order to optimize its resistance. In this conjunction, "desired surface texturization" is understood as a prescribed texturization of a flow surface, and in particular one that was defined in a separate development process. The texturization of a surface to lessen its resistance involves a topological texture or structure of the flow body surface, which imparts a shape to the flow body that reduces or optimizes the resistance of the flow surface due to the texturization when a fluid flows around the latter as intended. The texturization is optimized with respect to lowering resistance to the individual case at hand, in particular to the respective area of the flow surface to be provided with the latter.

Examples for the surface texturization to be created with the solution according to the invention include a rib structure, scaly structure, or golf ball structure.

In particular, the flow body can be an aircraft, a hull, or an automobile, or parts thereof exposed to the flow.

The laser material removing device 100 according to the invention exhibits a material removing laser 150 for milling the desired surface texturization out of a flow body intermediate product, and a controller 110 with a command output module 113 for generating command signals to actuate the material removing laser 150. In particular, the flow body intermediate product can be a raw product of the flow body, which is coated with a material out of which a suitable structure for the outside of the flow body, i.e., a desired surface texture, can be formed, in particular milled, burned, melted or even cut.

In particular, the material removing laser 150 can be a Picolaser.

According to the invention, the laser material removing device 100 exhibits a nominal flow body model module 120, which stores data that describe the nominal flow body, preferably in a discrete manner. In particular, the data can have the coordinates of points of the nominal flow body model. The points can be stored at a very miniscule distance from each other, preferably t a distance of less than 1 mm and i.e., at a respective distance of 0.1 mm between the respectively adjacent points of the point pattern or grid pattern, which defines the respective nominal flow body model.

The outer dimensions of the flow body are stored along with the nominal flow body model or nominal flow body model as a grid pattern in the controller 110 at a predetermined level of accuracy. In particular, the latter can be stored as a pattern or collection of point coordinates. The points can be defined in particular relative to the coordinate system of the flow body itself.

The nominal structural condition of the flow body is determined by the dimensions of the outer structure for the latter, based on the prescribed, and hence ideal, shape of the flow body in its unstressed state. In particular, this ideal shape of the flow body can be the definition or shape of the flow body that was developed based on the layout and testing of the flow body, and is incorporated into the construction documents for manufacturing the latter. As a consequence, the nominal flow body model reflects the ideal flow body in its predetermined form, which has not been deformed through exposure to bearing forces and/or weight forces. In particular, points on the outer structure of the flow body are defined with the nominal flow body model.

In an embodiment, the nominal flow body model can be defined in such a way that the points on the outer structure of the flow body defined with the latter are the points on the outer structure of the flow body in its raw state. In this conjunction, "raw state" is understood as the outer structure of the flow body after bringing the latter into its final shape using semi-finished products, without having applied a protective or color layer. In aircraft components or aircraft, the surface points will be provided with an additionally applied protective layer by adding an optional location or area-dependent thickness for the protective layer or first layer on the uncoated flow body.

In another embodiment of the invention, the nominal aircraft model is derived from the outer surface points of the nominal flow body model coated with a primer coat as well as other layers to be applied, such as in particular a color layer and/or a clear varnish coating in order to texturize or structure the outer surface of the flow body. Therefore, assumptions can here be made for the thickness of the protective varnish and/or color varnish, so that surface points of the flow body in its raw state plus the thickness of the primer coat and/or color varnish are stored as the nominal flow body model in this case.

In this way, the respectively stored points of the nominal flow body model can be stored with an accuracy of at least 0.1 mm.

By contrast, the real flow body yet to be provided with a surface texture using the method according to the invention has dimensions that deviate from the nominal flow body model, so that deviations exist between the respective point on this real flow body and the respectively corresponding point on the nominal flow body model. These deviations or differences are caused among other things by the mentioned outside forces that act on the flow body to be provided with a surface texture, or also by the dimensional inaccuracies within the framework of the prescribed production tolerances.

According to the invention, the flow body can be in particular an aircraft part or an aircraft, and a method is provided in particular for manufacturing an aircraft part or an aircraft with a desired surface texturization in order to optimize the resistance of the aircraft part or aircraft. Similarly to the above statements, the laser material removing device 100 exhibits a controller 110 and a nominal aircraft model module 120, which stores data that describe the nominal aircraft module, preferably in a discrete manner. In particular, the data can have the coordinates of points on the outer contour of the nominal aircraft module. The points can be stored at a very miniscule distance from each other, e.g., at a respective distance of 0.1 mm between respectively adjacent points of the point pattern or grid pattern.

The precise outer dimensions of the aircraft are stored with the nominal aircraft model or nominal aircraft model as a grid pattern in the controller 110. Nominal aircraft model is here also understood as a nominal aircraft part model. In particular, the latter can be stored as a pattern or collection of point coordinates. The points can be defined in relation to the coordinate system KS-F of the aircraft itself with the normally used X, Y and Z axes. As already described in general for the flow body, the nominal structural condition of the aircraft part or aircraft is derived from the respective dimensions for the outer structure of the latter, based on the prescribed, and hence ideal, shape of the aircraft part or aircraft in its unstressed state. In particular, this ideal shape of the aircraft part or aircraft can be the definition or shape of the aircraft part or aircraft that was developed based on the layout and testing of the aircraft part or aircraft, and is incorporated into the construction documents for manufacturing the latter. As a consequence, the nominal aircraft model reflects the ideal aircraft part or aircraft in terms of flow in its predetermined form, which has not been deformed through exposure to bearing forces and/or weight forces. In particular, points on the outer structure of the aircraft part or aircraft are defined with the nominal aircraft model.

In particular, the nominal aircraft model can be defined in such a way that the points on the outer structure of the aircraft part or aircraft defined with the latter are the points on the outer structure of the aircraft part or aircraft in its raw states. As described above, it may be assumed in an embodiment of the used nominal aircraft model that a primer, meaning a primer coat, is applied to the surface of the aircraft part or aircraft as the protective layer and the first layer on which a layer is to be applied for painting the flow body. In an alternative embodiment of the used nominal aircraft model, the latter can be defined based on the assumption that a primer, meaning a primer coat, is applied to the outer surface of the aircraft part or aircraft as the protective layer and the first layer on which a layer is yet to be applied for painting the aircraft part or aircraft in a subsequent manufacturing step. In order to determine these points on the coated flow body outer surface, it can here be provided that the coordinates for the points on the outer surface of the aircraft part or aircraft are used or determined from point coordinates for the completely uncoated aircraft part or aircraft, and obtained by adding an optional location or area-dependent thickness of the protective layer or first layer.

In another embodiment of the invention, the nominal flow body model is derived from the outer surface points of the uncoated nominal flow body model based on the flow body in its raw state and the added layer thicknesses corresponding thereto for the primer coat as well as other layers to be applied, such as in particular a color layer and/or a clear varnish coating in order to texturize or structure the outer surface of the flow body. Therefore, assumptions can here be made for the thickness of the protective varnish and/or color varnish, so that surface points of the flow body in its raw state plus the thickness of the primer coat and/or color varnish are stored as the nominal flow body model in this case.

In this way, the respectively stored points of the nominal flow body model can be stored with an accuracy of at least 0.1 mm.

By contrast, the real flow body yet to be provided with a surface texture using a method according to the invention has dimensions that deviate from the nominal flow body model, so that deviations exist between a respective point on this real flow body and the respectively corresponding point on the nominal flow body model. These deviations or differences are caused among other things by the mentioned outside forces that act on the flow body aircraft to be provided with a surface texture, or also by the dimensional inaccuracies within the framework of the prescribed production tolerances.

According to the invention, the flow body can be in particular an aircraft part or an aircraft, and a method is provided in particular for manufacturing an aircraft part or an aircraft with a desired surface texturization in order to optimize the resistance of the aircraft part or aircraft. Similarly to the above statements, the laser material removing device 100 exhibits a controller 110 and a nominal aircraft model module 120, which stores data that describe the nominal aircraft module, preferably in a discrete manner. In particular, the data can have the coordinates for points of the nominal aircraft module. The points can be stored at a very miniscule distance from each other, e.g., at a respective distance of 0.1 mm between respectively adjacent points of the point pattern or grid pattern.

The precise outer dimensions of the aircraft are stored with the nominal aircraft model or nominal aircraft model as a grid pattern. In particular, the latter can be stored as a pattern or collection of point coordinates. The points can be defined in relation to the coordinate system KS-F of the aircraft itself with axes X, Y and Z.

The nominal structural condition reflects the dimensions of the outer structure, which are given for the aircraft in the nominal state, meaning in the unstressed state. In the unstressed state, the aircraft structure is not exposed to any outside forces. The nominal structural condition can also be defined in such a way that the aircraft model is not deformed through exposure to the bearing forces and weight forces. Bearing forces are the forces introduced into the overall structure or a bearing in a real aircraft, for example by the landing gear. In the nominal aircraft model relating to the nominal structural condition, the latter can be defined and stored in a first version, in which the surfaces of the nominal aircraft are defined without texturization. The surfaces can here be indicated and defined without a protective layer or primer, or alternatively with such a protective layer. In particular values verified through testing can be used for the thickness of the primer or protective layer to be applied to an aircraft, so that the surfaces with a primer can be derived from the surface data for the nominal aircraft model without the primer coat. According to the invention, a second version of the nominal aircraft model can additionally be used for the method according to the invention as an option, in which the surface areas of the aircraft to be provided with a desired texturization are defined with the outer contour surfaces of this desired texturization. The outer contour surface of the surface texture with the desired texturization in the areas of the aircraft where the desired texturization is to be applied can be defined in particular by a plurality of points on the outer contour surface or by predetermined spatial elements, which are added to the layer to be defined, e.g., to the outer contour data belonging to the raw state of the aircraft.

In these cases, for example, it can be provided for the method according to the invention that the respectively stored points for defining outer contour surfaces of the nominal aircraft model are stored spaced apart from each other by an average distance of at least 0.1 mm within an accuracy of 0.001 mm.

In comparison to the nominal aircraft model of the real aircraft to be provided with a surface texture, the real aircraft to be provided with a desired texturization or surface texture using the method according to the invention has deviating dimensions, and hence deviations of a respective point on this specific aircraft from the respective point on the nominal aircraft model. In order to determine these deviations, the method according to the invention can be used in particular to compare coordinates or data for the outer contour of the real aircraft having a primer or protective layer with coordinates or data for the outer contour of the nominal aircraft model, also having a primer. However, it can also be provided in this comparison that the real aircraft or nominal aircraft model or neither the real aircraft nor the nominal aircraft model [have] outer contour coordinates, in which a protective layer or primer is present or assumed to be present. Among other things, these differences are caused by the mentioned forces acting on the real aircraft to be provided with a surface texture, or also by the dimensional inaccuracies within the framework of the prescribed production tolerances. For this reason, the deviations can result in particular from at least sectional deformations of the real aircraft relative to the nominal aircraft model.

The laser material removing device 100 according to the invention thus exhibits a nominal flow body model module or nominal aircraft model module 120 for storing prescribed nominal flow body model data that describe the outer shape of the flow body or aircraft, including the desired surface texturization. In addition, the laser material removing device 100 according to the invention exhibits a laser rangefinder 160 for determining real surface points on the real flow body or aircraft.

Real surface points on the real flow body or aircraft or comparison points are here determined in such a way that these data along with the nominal flow body model or nominal aircraft model 120 can be used to ascertain real flow body data for the outer shape of the real flow body or aircraft with the desired surface texturization to be created, and in particular a real flow body model or real aircraft model 140. In particular, it can here be provided that the position coordinates for predetermined points on the outer contour surface of the real aircraft be ascertained in a spatially fixed coordinate system, e.g., one related to bearing locations or reference points in the space where the aircraft is located, or with which the origin of such a spatially fixed coordinate system along with the axial directions of the latter are defined. It can also be provided that the position coordinates be determined using a spatially fixed coordinate system that is identical to the fixed-aircraft XYZ coordinate system. The predetermined points for the outer contour surface of the real aircraft can [be] marked locations of the latter and, for example, the foremost position of the aircraft tip, the rearmost position of the aircraft, as well as points at regular intervals along defined profile lines of the fuselage and/or airfoils. In this case, use can be made in a predetermined manner of points that are defined and, for example, spaced apart from each other at regular intervals on the profile lines of the fuselage lying symmetrically to the XZ plane of the aircraft as well as the profile lines of the fuselage lying in the XZ plane and in particular spaced apart at regular intervals along the Y direction. Alternatively or additionally, the distance measurement can be used to determine the outer contour surface points of the entire real aircraft, which are ascertained at prescribed lattice points of a spatially fixed coordinate system that coincides with the XYZ coordinate system of the plane or is offset in a predetermined manner relative thereto, wherein lattice points of a prescribed lattice of a plane lying parallel to the XY and/or XZ plane or a plane identical with the latter are used as reference points for the distance measurement, for example, and the rangefinder can be used to define the points at which the lines running perpendicular to the respective plane and passing through a respective one of the lattice points intersect with the outer contour surface of the real aircraft as outer contour surface points for which the spatial positions and spatial coordinates are determined.

The invention can provide that the laser rangefinder 160 be moved by a rangefinder adjusting device along a desired path at predetermined points on such a desired path or predetermined points on the outer surface of the real flow body or aircraft, and at these points perform a corresponding distance measurement to determine with a sufficient accuracy the real flow body coordinates or data for the outer shape or contour surface of the real flow body as reference points. According to the invention, the desired path can be prescribed, or can be determined based on the ascertained reference points for the outer contour surface points. In order to determine a real flow body model based on these data and the nominal flow body model, the distance measurement must be performed within a sufficient accuracy. This is why a PicoLaser is preferably used to perform the distance measurements, since the latter can be used to ascertain the coordinates for the points of the outer surface of the real flow body or aircraft within an accuracy lying in the µm range, and this level of precision makes it possible to determine real flow body data or a real flow body model for the additional procedural steps according to the invention from the nominal flow body model data present at least in the same range of accuracy.

In order to determine real flow body data or a real flow body model, the laser material removing device 100 can exhibit a flow body data correction module 125 that is functionally connected with the laser rangefinder 160, and exhibits a function for correcting the prescribed nominal flow body model data into real flow body data for the outer shape of the real flow body or a real flow body model with the desired surface texturization to be created. It can here be provided that the coordinate system of the nominal flow body model be identical to the coordinate system for the real aircraft.

In particular, the correction function can be designed in such a way that the surface point coordinates for the real flow body or aircraft ascertained via the distance measurement can be compared with the corresponding coordinates of the nominal flow body model without desired texturization, and a deviation or distance lying between the respective points can be determined. In this regard, the surface point coordinates can have a distance of more than 0,01 m and in particular more than 0,1 m from each orther. If the surface points of the real flow body have been suitably selected, and in particular are suitably distributed over the entire outer surface, the nominal aircraft model without desired texturization can be used to ascertain the surface points lying between the latter. Connecting lines between the determined outer contour points of the real aircraft can here be used as reference lines, which are established as new outer contour lines of the nominal flow body model. The additional points on the non-deformed or initial nominal flow body model are determined subject to prescribed boundary conditions, and while ascertaining curves through the determined contour surface points, e.g., by projecting the points of the nominal flow body model onto the ascertained curves, so that the latter then become points on a real flow body model or real flow body points. For example, the intermediate points lying between the reference points of the nominal flow body model corresponding to the reference points of the real flow body model can be projected onto the respective reference line by adjusting the projection direction to the projection direction of the reference points continuously over the progression of the reference line in a manner corresponding to the distances away from the respective reference points.

Use can here be made of a version of the nominal flow body model whose contour surface points are points on the unprimed or primed contour surface of the nominal flow body. If the coordinates for the contour surface points of the real flow body are determined in a distance measurement using a flow body having a primer with a layer thickness, a nominal flow body model can be utilized to generate the real flow body model or real flow body points, which also exhibits outer contour points corresponding to outer contour points of a primer with the same layer thickness.

In order to produce data or coordinates for a real flow body model or ascertained real flow body points with the desired texturization from outer contour surface points of the real flow body model initially determined without consideration of the desired texturization or ascertained real flow body points, the desired texturization of the nominal aircraft model is in a next step added to this real flow body model determined without consideration of the desired texturization or the ascertained real flow body points. It can here be provided that the change in distances for reference points and/or reference lines from the nominal aircraft model to the real aircraft model be considered accordingly, e.g., as when coating the real aircraft body model with the desired texturization present from the corresponding nominal aircraft model, which can be done by proportionately adjusting intermediate points subject to the boundary condition of retaining the overall volume between the desired texturization and the surface of the primer for the respective flow body model.

The laser material removing device 100 further exhibits a command output device 113 for issuing commands to the material removing laser 150, which generates command signals based on the data for the real flow body model 140 for moving the material removing laser 150 along the desired path. The command signals for moving the material removing laser 150 causes the material removing laser 150 to traverse the flow surface in a predetermined manner in order to mill the desired surface texturization out of the clear varnish coating according to the desired surface texturization generated for the real aircraft model.

In particular, the method according to the invention for manufacturing a flow body with a desired surface texturization for purposes of optimizing its resistance involves the following steps:
▪ applying and in particular spraying on a coat of color varnish to color the outside of the flow body surface at least on the primary surface areas of the flow body,
▪ applying a coat of clear varnish on at least the primary surface area of the flow body,
▪ hardening the coat of clear varnish by exposing it to infrared radiation,
▪ determining the coordinates for the coated flow body surface in the form of real flow body data 130,
▪ determining a real flow body model 140 for the outer shape of the flow body with the desired surface texturization to be created from the determined real flow body data 130 for the coated flow body surface and from a nominal flow body model 120 for the outer shape of the flow body, to include in particular the desired surface texturization,
▪ using a material removing laser 150 to mill the desired surface texturization out of the clear varnish coating, wherein commands for activating the material removing laser 150 for creating the desired surface texturization are based on the real flow body model 140.

The invention can further provide that
▪ color varnish and clear varnish be applied over the entire surface of the flow body, including the windows, optionally recessed access openings, and recesses for accommodating parts, components and/or sensors on the outside of the flow body, and that
▪ clear varnish applied to the windows while milling the desired surface texturization out of the clear varnish coating be milled off in such a way as to completely mill off color varnish and clear varnish present on the windows.

The clear varnish coating can be applied with a ceramic glass material. The coat of clear varnish an also be a plasma coating. Alternatively or additionally, a two-component varnish can be used for the clear varnish coating.

Commands for the adjustment motions of the material removing laser 150 can be issued based on the real flow body model 140 by virtue of the fact that, for purposes of material removal, a desired path for the adjustment motions of the material removing laser 150 is determined based on a prescribed distance between the desired path and points on the outer surface of the real flow body model 140, and the material removing laser 150 is commanded in such a way that the latter moves along the desired path.

Commands for the adjustment motions of the material removing laser 150 can be issued based on position points of the clear varnish-coated outer surface of the flow body to be texturized, wherein an ultrasound rangefinder 170 is used in an ultrasound removal measurement to determine the position points as points having a predetermined position for the outer surface of the clear varnish coating, and a desired path for the adjustment motions of the material removing laser 150 is determined from these position points, and commands are issued to the material removing laser 150 so as to move it along the desired path. An embodiment of the method according to the invention can provide that the ultrasound rangefinder 170 traverses desired paths along the surface of the flow body to be texturized, and that, at positions of the ultrasound rangefinder 170, the respective position and the distance of the ultrasound rangefinder 170 or a reference point of the latter from the outer surface of the flow body to be texturized be determined, and that the respective position and the respective distance be used to ascertain a desired position and desired distance for the adjustment motion of the material removing laser 150. Commands are here issued to the adjustment device of the material removing laser 150 in such a way that, while executing the adjustment motion of the material removing laser 150, the desired distances are corrected based on a laser distance measurement to adjustment positions with a respectively predetermined distance that is predetermined for executing the material removing process.

## Claims

1. A method for manufacturing a flow body with a desired surface texturization in order to optimize its resistance, comprising the following steps:
▪ applying a coat of color varnish to color the outside of the flow body surface at least on the primary surface areas of the flow body,
▪ applying a coat of clear varnish on at least the primary surface area of the flow body,
▪ hardening the coat of clear varnish by exposing it to infrared radiation, and
▪ using a material removing laser (150) to mill the desired surface texturization out of the clear varnish coating,
**characterized by**
▪ determining the coordinates for the coated flow body surface in the form of real flow body data (130), and
▪ determining a real flow body model (140) for the outer shape of the flow body with the desired surface texturization to be created from the determined real flow body data (130) for the coated flow body surface and from a nominal flow body model (120) for the outer shape of the flow body, to include in particular the desired surface texturization,
▪ wherein commands for activating the material removing laser (150) for creating the desired surface texturization are based on the real flow body model (140).

2. The method according to claim 1, **characterized in that** the flow body to be provided with a desired surface texturization is an aircraft.

3. The method according to claim 1 or 2, characterized
▪ in that color varnish and clear varnish is applied over the entire surface of the flow body, including the windows, optionally recessed access openings, and recesses for accommodating parts, components and/or sensors on the outside of the flow body, and
▪ in that clear varnish applied to the windows while milling the desired surface texturization out of the clear varnish coating is milled off in such a way as to completely mill off color varnish and clear varnish present on the windows.

4. The method according to one of the preceding claims, **characterized in that** a two-component varnish is used for the clear varnish coating.

5. The method according to one of the preceding claims, **characterized in that** commands for the adjustment motions of the material removing laser (150) are issued based on the real flow body model (140) by virtue of the fact that, for purposes of material removal, a desired path for the adjustment motions of the material removing laser (150) is determined based on a prescribed distance between the desired path and points on the outer surface of the real flow body model (140), and the material removing laser (150) is commanded in such a way that the latter moves along the desired path.

6. The method according to one of claims 1 to 3, **characterized in that** commands for the adjustment motions of the material removing laser (150) are issued based on position points of the clear varnish-coated outer surface of the flow body to be texturized, wherein an ultrasound rangefinder (170) is used in an ultrasound removal measurement to determine the position points as points having a predetermined position for the outer surface of the clear varnish coating, and a desired path for the adjustment motions of the material removing laser (150) is determined from these position points, and commands are issued to the material removing laser (150) so as to move it along the desired path.

7. The method according to claim 6, **characterized in that**
▪ the ultrasound rangefinder (170) traverses desired paths along the surface of the flow body to be texturized, and that, at positions of the ultrasound rangefinder (170), the respective position and the distance of the ultrasound rangefinder (170) or a reference point of the latter from the outer surface of the flow body to be texturized is determined, and that the respective position and the respective distance are used to ascertain a desired position and desired distance for the adjustment motion of the material removing laser (150), and that
▪ commands are issued to the adjustment device of the material removing laser (150) in such a way that, while executing the adjustment motion of the material removing laser (150), the desired distances are corrected based on a laser distance measurement to adjustment positions with a respectively predetermined distance that is predetermined for executing the material removing process.

8. A laser material removing device (100) for creating a desired surface texturization on a coated flow body in order to optimize its resistance, with the laser material removing device (100) exhibiting:
▪ anominal flow body model module (120) for storing prescribed nominal flow body model data, which describe the outer shape of the flow body, including the desired surface texturization,
▪ a laser rangefinder (160) for determining real surface points of the real flow body,
▪ a flow body data correction module (125) functionally connected with the laser rangefinder (160), with a function for correcting the prescribed nominal flow body model data to real flow body data for the outer shape of the real flow body with the desired surface texturization to be created,
▪ a material removing laser (150) for generating the desired surface texturization on the flow body,
▪ a desired path determining function (115) to determine a desired path as a setting for the adjustment motion of the material removing laser (150) along the flow body in order to generate the desired surface texturization, wherein the desired path determining function (115) ascertains the desired path based on the real flow body data,
▪ a command output device (113) for issuing commands to the material removing laser (150), which, based on the real flow body data for the outer shape of the real flow body, generates command signals for moving the material removing laser (150) along the desired path, via which the material removing laser (150) is moved in a predetermined way over the flow surface to mill the desired surface texturization out of the clear varnish coating.

9. The laser material removing device (100) according to claim 8, **characterized in that** the flow body is a watercraft, such as a ship, a surface vehicle, an aircraft or a constituent of such a vehicle with a flow surface provided for exposure to an incoming flow.

10. The laser material removing device (100) according to claim 8 or 9, **characterized in that** the laser material removing device (100) exhibits a texture forming command output device, with which the laser beam is adjusted with respect to direction and intensity as the material removing laser (150) is guided along the desired trajectory, so as to create the desired surface texturization.

11. The laser material removing device (100) according to one of claims 8 to 10, **characterized in that** the laser material removing device (100) exhibits a safety shutdown function with an image recognition module, which performs a function to determine the approach by the laser material remover to a primer coat located under the clear varnish through a color comparison of the color currently arising at the laser beam interface of the varnish coating to the color of the primer coat, wherein the safety shutdown function generates a shutdown signal, and relays it to the controller to reduce the laser beam intensity or shut down the laser material remover once the color arising at the laser beam interface has dropped below a predetermined difference in color value relative to the color of the primer coat.

## Patentansprüche

1. Verfahren zur Herstellung eines Strömungskörpers mit einer gewünschten Oberflächentexturierung zur Optimierung seines Widerstands, wobei das Verfahren die folgenden Schritte aufweist:
▪ Auftragen einer Farblack-Beschichtung, um die Außenseite der Strömungskörperoberfläche zumindest auf den Haupt-Oberflächenbereichen des Strömungskörpers zu färben,
▪ Auftragen einer Klarlack-Beschichtung zumindest auf die Haupt-Oberflächenbereiche des Strömungskörpers,
▪ Aushärtung der Klarlack-Beschichtung, indem sie Infrarotstrahlung ausgesetzt wird, und
▪ Verwenden eines Materialabtragslasers (150), um die gewünschte Oberflächentexturierung aus der Klarlack-Beschichtung auszufräsen,
**gekennzeichnet durch**
▪ Ermitteln der Koordinaten für die beschichtete Strömungskörper-Oberfläche in Form von Realströmungskörperdaten (130) und
▪ Ermitteln eines Realströmungskörpermodells (140) für die äußere Form des Strömungskörpers mit der zu erzeugenden gewünschten Oberflächentexturierung aus den ermittelten Realströmungskörperdaten (130) für die beschichtete Strömungskörper-Oberfläche und aus einem Nominalströmungskörpermodell (120) für die äußere Form des Strömungskörpers, um insbesondere die gewünschte Oberflächentexturierung einzuschließen,
▪ wobei Befehle zur Betätigung des Materialabtragslasers (150) zur Erzeugung der gewünschten Oberflächentexturierung auf dem Realströmungskörpermodell (140) basieren.

2. Verfahren nach Anspruch 1, **dadurch gekennzeichnet, dass** der mit einer gewünschten Oberflächentexturierung zu versehende Strömungskörper ein Flugzeug ist.

3. Verfahren nach Anspruch 1 oder 2, **dadurch gekennzeichnet**,
▪ dass Farblack und Klarlack über die gesamte Oberfläche des Strömungskörpers einschließlich der Fenster, optional ausgenommen Zugangsöffnungen und Ausnehmungen zur Aufnahme von Bauteilen, Komponenten und/oder Sensoren an der Außenseite des Strömungskörpers, aufgetragen wird und
▪ dass beim Ausfräsen der gewünschten Oberflächentexturierung aus der Klarlack-Beschichtung der auf Fenstern aufgebrachte Klarlack derart abgefräst wird, dass auf den Fenstern befindlicher Farblack und Klarlack vollständig abgefräst wird.

4. Verfahren nach einem der vorhergehenden Ansprüche, **dadurch gekennzeichnet, dass** für die Klarlack-Beschichtung ein Zwei-Komponenten-Lack verwendet wird.

5. Verfahren nach einem der vorhergehenden Ansprüche, **dadurch gekennzeichnet, dass** Befehle für die Stellbewegungen des Materialabtragslasers (150) auf der Basis des Realströmungskörpermodells (140) dadurch ausgegeben werden, dass zur Materialabtragung eine Sollbahn für die Stellbewegungen des Materialabtragslasers (150) aufgrund eines vorgegebenen Abstands zwischen der Sollbahn und Punkten auf der Außenfläche des Realströmungskörpermodells (140) ermittelt wird und der Materialabtragslaser (150) derart kommandiert wird, dass dieser sich entlang der Sollbahn bewegt.

6. Verfahren nach einem der Ansprüche 1 bis 3, **dadurch gekennzeichnet, dass** Befehle für die Stellbewegungen des Materialabtragslasers (150) auf der Basis von Positionspunkten der mit der Klarlack-Beschichtung versehenen Außenfläche des zu texturierenden Strömungskörpers ausgegeben werden, wobei ein Ultraschall-Entfernungsmesser (170) in einer Ultraschall-Entfernungsmessung verwendet wird, um die Positionspunkte als Punkte zu ermitteln, die eine vorbestimmte Position für die Außenfläche der Klarlack-Beschichtung haben, und aus diesen Positionspunkten eine Sollbahn für die Stellbewegungen des Materialabtragslasers (150) ermittelt und Befehle an den Materialabtragslaser (150) ausgegeben werden, um diesen entlang der Sollbahn zu bewegen.

7. Verfahren nach Anspruch 6, **dadurch gekennzeichnet**,
▪ dass der Ultraschall-Entfernungsmesser (170) entlang von Sollbahnen entlang der Oberfläche des zu texturierenden Strömungskörpers verfährt und dass an Positionen des Ultraschall-Entfernungsmessers (170) die jeweilige Position und der Abstand des Ultraschall-Entfernungsmessers (170) oder eines Referenzpunktes desselben von der Außenfläche des zu texturierenden Strömungskörpers ermittelt werden und dass die jeweilige Position und der jeweilige Abstand verwendet werden, um eine Sollposition und einen Sollabstand für die Stellbewegung des Materialabtragslasers (150) zu ermitteln, und
▪ dass Befehle an die Stellvorrichtung des Materialabtragslasers (150) derart ausgegeben werden, dass die Sollabstände beim Durchführen der Stellbewegung des Materialabtragslasers (150) aufgrund einer LaserEntfernungsmessung auf Stellpositionen mit einem jeweils vorbestimmten Abstand korrigiert werden, der für die Durchführung des Materialabtragungsvorgangs vorbestimmt ist.

8. Laser-Materialabtragsvorrichtung (100) zur Bildung einer gewünschten Oberflächentexturierung an einem beschichteten Strömungskörper, um dessen Widerstand zu optimieren, wobei die Laser-Materialabtragsvorrichtung (100) aufweist:
▪ ein Nominalströmungskörpermodell-Modul (120) zum Abspeichern von vorgegebenen Nominalströmungskörpermodell-Daten, die die Außenform des Strömungskörpers einschließlich der gewünschten Oberflächentexturierung beschreiben,
▪ einen Laser-Entfernungsmesser (160) zur Ermittlung realer Oberflächenpunkte des realen Strömungskörpers,
▪ ein funktional mit dem Laser-Entfernungsmesser (160) in Verbindung stehendes Strömungskörperdaten-Korrekturmodul (125) mit einer Funktion zur Korrektur der vorgegebenen Nominalströmungskörpermodell-Daten zu Realströmungskörperdaten für die äußere Form des realen Strömungskörpers mit der zu bildenden gewünschten Oberflächentexturierung,
▪ einen Materialabtragslaser (150) zur Erzeugung der gewünschten Oberflächentexturierung an dem Strömungskörper,
▪ eine Sollbahn-Ermittlungsfunktion (115) zur Ermittlung einer Sollbahn als eine Einstellung für die Stellbewegung des Materialabtragslasers (150) entlang des Strömungskörpers zur Erzeugung der gewünschten Oberflächentexturierung, wobei die Sollbahn-Ermittlungsfunktion (115) die Sollbahn auf der Basis der Realströmungskörperdaten ermittelt,
▪ eine Befehlausgabevorrichtung (113) zur Ausgabe von Befehlen an den Materialabtragslaser (150), die auf der Basis der Realströmungskörperdaten für die äußere Form des realen Strömungskörpers Befehlssignale zur Bewegung des Materialabtragslasers (150) entlang der Sollbahn erzeugt, durch die der Materialabtragslaser (150) in vorbestimmter Weise über die Strömungsoberfläche bewegt wird, um die gewünschte Oberflächentexturierung aus der Klarlack-Beschichtung auszufräsen.

9. Laser-Materialabtragsvorrichtung (100) nach Anspruch 8, **dadurch gekennzeichnet, dass** der Strömungskörper ein Wasserfahrzeug, wie etwa ein Schiff, ein Landfahrzeug, ein Flugzeug oder ein Bestandteil eines solchen Fahrzeugs mit einer Strömungsoberfläche ist, die vorgesehen ist, um einer ankommenden Strömung ausgesetzt zu werden.

10. Laser-Materialabtragsvorrichtung (100) nach Anspruch 8 oder 9, **dadurch gekennzeichnet, dass** die Laser-Materialabtragsvorrichtung (100) eine Texturbildungs-Befehlsausgabevorrichtung aufweist, mit der während der Führung des Materialabtragslasers (150) entlang des Sollbahnverlaufs der Laserstrahl in Bezug auf Richtung und Intensität eingestellt wird, um die gewünschte Oberflächentexturierung zu bilden.

11. Laser-Materialabtragsvorrichtung (100) nach einem der Ansprüche 8 bis 10, **dadurch gekennzeichnet, dass** die Laser-Materialabtragsvorrichtung (100) eine Sicherheitsabschaltungsfunktion mit einem Bilderkennungsmodul aufweist, das eine Funktion zur Feststellung der Annäherung des Laser-Materialabtrags an eine unterhalb des Klarlacks befindliche Grundbeschichtung durch einen Farbvergleich der momentan an der Laserstrahl-Schnittstelle der Lackschicht auftretenden Farbe mit der Farbe der Grundbeschichtung ausführt, wobei die Sicherheitsabschaltungsfunktion ein Abschaltungssignal erzeugt und es an die Steuerungsvorrichtung weiterleitet, um die Laserstrahl-Intensität zu reduzieren oder den Laser-Materialabtrag abzuschalten, wenn die an der Laserstrahl-Schnittstelle auftretende Farbe eine vorbestimmte Farbwertdifferenz relativ zu der Farbe der Grundbeschichtung unterschreitet.

## Revendications

1. Procédé destiné à fabriquer un corps d'écoulement qui présente une texturisation de surface souhaitée de façon à optimiser sa résistance, comprenant les étapes suivantes consistant à :
- appliquer un revêtement de vernis de couleur de façon à colorer l'extérieur de la surface du corps d'écoulement au niveau de zones de surface primaires au moins du corps d'écoulement ;
- appliquer un revêtement de vernis clair sur la zone de surface primaire au moins du corps d'écoulement ;
- durcir le revêtement de vernis clair en l'exposant à un rayonnement infrarouge ; et
- utiliser un laser de retrait de matière (150) de façon à fraiser la texturisation de surface souhaitée hors du revêtement de vernis clair ;
**caractérisé par** les étapes consistant à :
- déterminer les coordonnées de la surface du corps d'écoulement revêtue sous la forme de données de corps d'écoulement vrai (130) ; et
- déterminer un modèle de corps d'écoulement vrai (140) de la forme extérieure du corps d'écoulement qui présente la texturisation de surface souhaitée à créer à partir des données de corps d'écoulement vrai (130) déterminées de la surface du corps d'écoulement revêtue et à partir d'un modèle de corps d'écoulement nominal (120) de la forme extérieure du corps d'écoulement, de façon à inclure en particulier la texturisation de surface souhaitée ;
- dans lequel les commandes destinées à activer le laser de retrait de matière (150) destiné à créer la texturisation de surface souhaitée, sont basées sur le modèle de corps d'écoulement vrai (140).

2. Procédé selon la revendication 1, **caractérisé en ce que** le corps d'écoulement à doter d'une texturisation de surface souhaitée, est un aéronef.

3. Procédé selon la revendication 1 ou la revendication 2, **caractérisé en ce que** :
- le vernis de couleur et le vernis clair sont appliqués sur toute la surface du corps d'écoulement, y compris les hublots, les ouvertures d'accès éventuellement renfoncées et les renfoncements destinés à recevoir des parties, des composants et/ou des capteurs sur l'extérieur du corps d'écoulement ; et
- le vernis clair appliqué sur les hublots tout en fraisant la texturisation de surface souhaitée hors du revêtement de vernis clair, est fraisé de façon à fraiser complètement le vernis de couleur et le vernis clair présents sur les hublots.

4. Procédé selon l'une quelconque des revendications précédentes, **caractérisé en ce qu'**un vernis à deux composants est utilisé pour le revêtement de vernis clair.

5. Procédé selon l'une quelconque des revendications précédentes, **caractérisé en ce que** des commandes de mouvements de réglage du laser de retrait de matière (150) sont fournies sur la base du modèle de corps d'écoulement vrai (140) en raison du fait que, à des fins de retrait de matière, un chemin souhaité de mouvements de réglage du laser de retrait de matière (150) est déterminé sur la base d'une distance prescrite entre le chemin souhaité et des points qui se situent sur la surface extérieure du modèle de corps d'écoulement vrai (140), et le laser de retrait de matière (150) est commandé de telle sorte que ce dernier se déplace le long du chemin souhaité.

6. Procédé selon l'une quelconque des revendications 1 à 3, **caractérisé en ce que** des commandes de mouvements de réglage du laser de retrait de matière (150, sont fournies sur la base de points de position de la surface extérieure revêtue de vernis clair du corps d'écoulement à texturiser, dans lequel un télémètre à ultrasons (170) est utilisé dans une mesure de retrait à ultrasons de façon à déterminer les points de position en tant que points qui présentent une position prédéterminée de la surface extérieure du revêtement de vernis clair, et un chemin souhaité des mouvements de réglage du laser de retrait de matière (150) est déterminé à partir de ces points de position, et des commandes sont fournies au laser de retrait de matière (150) de façon à le déplacer le long du chemin souhaité.

7. Procédé selon la revendication 6, **caractérisé en ce que** :
- le télémètre à ultrasons (170) traverse des chemins souhaités le long de la surface du corps d'écoulement à texturiser, et **en ce qu'**on détermine, au niveau de positions du télémètre à ultrasons (170), la position respective et la distance du télémètre à ultrasons (170) ou un point de référence de ce dernier à partir de la surface extérieure du corps d'écoulement à texturiser, et **en ce que** la position respective et la distance respective sont utilisées de façon à établir une position souhaitée et une distance souhaitée du mouvement de réglage du laser de retrait de matière (150) ; et **en ce que** :
- des commandes sont fournies au dispositif de réglage du laser de retrait de matière (150) de telle sorte que, tout en exécutant le mouvement de réglage du laser de retrait de matière (150), les distances souhaitées soient corrigées sur la base d'une mesure de distance du laser jusqu'à des positions de réglage avec une distance respectivement prédéterminée qui est prédéterminée de façon à exécuter le processus de retrait de matière.

8. Dispositif de retrait de matière par laser (100) destiné à créer une texturisation de surface souhaitée sur un corps d'écoulement revêtu de façon à optimiser sa résistance, le dispositif de retrait de matière par laser (100) présentant :
- un module de modèle de corps d'écoulement nominal (120) destiné à stocker des données de modèle de corps d'écoulement nominal prescrites, qui décrivent la forme extérieure du corps d'écoulement, y compris la texturisation de surface souhaitée ;
- un télémètre à laser (160) destiné à déterminer des points de surface vraie du corps d'écoulement vrai ;
- un module de correction de données de corps d'écoulement (125) connecté de manière fonctionnelle au télémètre à laser (160), qui présente une fonction destinée à corriger les données de modèle de corps d'écoulement nominal prescrites en données de corps d'écoulement vrai de la forme extérieure du corps d'écoulement vrai qui présente la texturisation de surface souhaitée à créer ;
- un laser de retrait de matière (150) destiné à générer la texturisation de surface souhaitée sur le corps d'écoulement ;
- une fonction de détermination de chemin souhaité (115) destinée à déterminer un chemin souhaité en tant que réglage du mouvement de réglage du laser de retrait de matière (150) le long du corps d'écoulement de façon à générer la texturisation de surface souhaitée, dans lequel la fonction de détermination de chemin souhaité (115) établit le chemin souhaité sur la base des données du corps d'écoulement vrai ;
- un dispositif de sortie de commande (113) destiné à fournir des commandes au laser de retrait de matière (150), qui, sur la base des données du corps d'écoulement vrai de la forme extérieure du corps d'écoulement vrai, génère des signaux de commande destinés à déplacer le laser de retrait de matière (150) le long du chemin souhaité, grâce à quoi le laser de retrait de matière (150) est déplacé d'une manière prédéterminée au-dessus de la surface d'écoulement de façon à fraiser la texturisation de surface souhaitée hors du revêtement de vernis clair.

9. Dispositif de retrait de matière par laser (100) selon la revendication 8, **caractérisé en ce que** le corps d'écoulement est un hydronef, tel qu'un navire, un véhicule de surface, un aéronef ou un constituant d'un tel véhicule qui présente une surface d'écoulement prévue pour une exposition à un écoulement entrant.

10. Dispositif de retrait de matière par laser (100) selon la revendication 8 ou la revendication 9, **caractérisé en ce que** le dispositif de retrait de matière par laser (100) présente un dispositif de sortie de commande de formage de texture, grâce auquel le faisceau laser est réglé en ce qui concerne la direction et l'intensité lorsque le laser de retrait de matière (150) est guidé le long de la trajectoire souhaitée, de façon à créer la texturisation de surface souhaitée.

11. Dispositif de retrait de matière par laser (100) selon l'une quelconque des revendications 8 à 10, **caractérisé en ce que** le dispositif de retrait de matière par laser (100) présente une fonction d'arrêt de sécurité avec un module de reconnaissance d'image, qui exécute une fonction visant à déterminer l'approche par le dispositif de retrait de matière par laser d'une couche primaire située sous le vernis clair grâce à une comparaison de couleur de la couleur qui apparaît actuellement au niveau de l'interface du faisceau laser du revêtement de vernis et de la couleur de la couche primaire, dans lequel la fonction d'arrêt de sécurité génère un signal d'arrêt et le transmet au contrôleur de façon à réduire l'intensité du faisceau laser ou à arrêter le dispositif de retrait de matière par laser une fois que la couleur qui apparaît au niveau de l'interface du faisceau laser a chuté en dessous d'une différence prédéterminée, en valeur de couleur, par rapport à la couleur de la couche primaire.
